# EUROPÄISCHE PATENTSCHRIFT

(11) **EP 1 630 048 B1**
(45) Veröffentlichungstag und Bekanntmachung des Hinweises auf die Patenterteilung: **27.02.2008**
(21) Anmeldenummer: 05090281.6
(22) Anmeldetag: 15.07.2003
(51) Int. Cl.: B60R 21/16, B60R 21/20

(54) **Insassenschutzeinrichtung für ein Fahrzeug**
Passanger safety device for vehicles
Dispositif de protection pour les occupants de véhicules

(30) Priorität: 09.08.2002 DE 10237401
(43) Veröffentlichungstag der Anmeldung: 01.03.2006
(62) Teilanmeldung aus: 03090215.9
(73) Patentinhaber: TAKATA - PETRI AG, 63743 Aschaffenburg (DE)
(72) Erfinder: Klaiber, Uwe, 89522 Heidenhein (DE); Völk, Jürgen, 89129 Langenau (DE); Glöckler, Oliver, 89081 Nersingen (DE); Einsiedel, Heinrich, 89077 Ulm (DE)
(74) Vertreter: Baumgärtel, Gunnar

(56) Entgegenhaltungen:
- EP-A- 0 949 123
- EP-A- 0 980 796
- US-A1- 2002 036 395

## Beschreibung

Aus der Europäischen Offenlegungsschrift EP 0 980 796 ist eine gattungsgemäße Insassenschutzeinrichtung für ein Fahrzeug bekannt, die einen Gassack mit einem zikzak-gefalteten Abschnitt und einem gerollten Abschnitt umfasst. Der Gassack ist im Bereich der Seitenstruktur des Daches des Fahrzeugs angeordnet.

Der Erfindung liegt die Aufgabe zugrunde, eine Insassenschutzreinrichtung für ein Fahrzeug anzugeben, durch die der Kopf eines Fahrzeuginsassen - im Falle eines Unfalls - zuverlässig vor dem Aufschlagen an einer Seitenwand oder einer Seitenscheibe des Fahrzeugs geschützt wird.

Diese Aufgabe wird erfindungsgemäß durch eine Insassenschutzreinrichtung mit den Merkmalen gemäß Anspruch 1 gelöst. Vorteilhafte Weiterbildungen sind in den Unteransprüchen beschrieben.

Gemäß der Erfindung ist vorgesehen, den Gassack der Insassenschutzeinrichtung im Dachbereich des Fahrzeugs anzuordnen; im Falle eines Unfalls wird der Gassack dann aufgeblasen und die Seitenwand durch den Gassack derart abdeckt, dass der Kopf des Fahrzeuginsassen nicht mehr gegen die Seitenwand schlagen kann. Falls die Seitenwand durch eine Seitenscheibe gebildet ist, schützt die erfindungsgemäße Insassenschutzeinrichtung dann in entsprechender Weise vor einem Aufschlagen des Kopfes gegen die Seitenscheibe. Um dabei zu erreichen, dass sich der Gassack auch dann richtig entfalten kann, wenn sich der Fahrzeuginsasse, insbesondere mit seinem Kopf, sehr dicht an der Seitenwand (bzw. Seitenscheibe) befindet, ist gemäß der Erfindung vorgesehen, dass der Gassack zumindest teilweise aufgerollt in der Insassenschutzeinrichtung verstaut ist. Durch diese Maßnahme wird nämlich ein besonders zuverlässiges Entfalten des Gassackes auch dann sichergestellt, wenn sich der Fahrzeuginsasse sehr dicht an der Seitenwand befindet und der sich aufblasende Gassack mit dem Fahrzeuginsassen in Kontakt kommt; kommt es nämlich beim Aufblasen des Gassacks zu einem Auftreffen des Gassacks auf dem Kopf oder einem anderen Körperteil des Fahrzeuginsassen, so wird die aufgerollte Gassackhülle seitlich an dem Fahrzeuginsassen abrollen, so dass es dennoch zu dem gewünschten Entfalten des Gassacks kommt. Um die Entfaltungsgeschwindigkeit und die Aufblasgeschwindigkeit zu erhöhen, ist erfindungsgemäß außerdem vorgesehen, dass die Rollfaltung noch mit einer Zickzack-Faltung kombiniert wird. Erfindungsgemäß ist der Teilbereich mit der Zikzack-Faltung innerhalb der Sackhüllenrolle eingerollt.

Wird die erfindungsgemäße Insassenschutzeinrichtung im Bereich der Seitenscheibe eingesetzt, so schützt sie zuverlässig auch vor einem Hinausschleudern von Körperteilen des Fahrzeuginsassen.

Im Rahmen einer Weiterbildung der erfindungsgemäßen Insassenschutzeinrichtung wird es als vorteilhaft angesehen, wenn die Sackhülle zumindest teilweise unter Berücksichtigung einer vorgegebenen Rollrichtung zu einer Sackhüllenrolle aufgerollt ist, wobei die vorgegebene Rollrichtung diejenige Rollrichtung ist, bei der die dem Fahrzeuginsassen zugewandte Seite der Sackhülle außen und die der Seitenwand oder Seitenscheibe zugewandte Seite der Sackhülle innen liegt. Aufgrund dieser vorgegebenen Rollrichtung wird nämlich sichergestellt, dass der Gassack in den Bereich - also den Spalt - zwischen Seitenwand und Fahrzeuginsassen abrollen wird, wenn er beim Entfalten und Aufblasen auf den Fahrzeuginsassen trifft; konkret wird also sichergestellt, dass sich der Gassack stets im Spaltbereich - zwischen Seitenwand und Fahrzeuginsassen - entfalten wird.

Vorzugsweise ist die Zickzack-Faltung außerhalb des Bereiches angeordnet, in dem sich der Kopf des Fahrzeuginsassen befindet, da in diesem Bereich - wie oben erläutert - der Gassack aufgerollt sein soll, insbesondere in der vorgegebenen Rollrichtung.

Insbesondere der Kopf des Fahrzeuginsassen stellt ein Hindernis beim Entfalten des Gassackes dar, so dass es als vorteilhaft angesehen wird, wenn der Gassack derart aufgerollt ist, dass sich die mit der vorgegebenen Rollrichtung gebildete Sackhüllenrolle im Bereich der Kopfhöhe des Fahrzeuginsassen abrollt und entfaltet. Durch diese Maßnahme wird also erreicht, dass stets der aufgerollte Teil der Gassackhülle auf den Fahrzeuginsassen treffen wird, falls sich dieser zu dicht an der Seitenwand befindet.

Zum Schutz des Gassacks im Aufnahmebehälter wird es als vorteilhaft angesehen, wenn der Gassack im Aufnahmebehälter von einer Schutzhülle bzw. einer Modulhülle umgeben ist.

Um ein gleichmäßiges und schnelles Befüllen des Gassackes zu erreichen, wird es als vorteilhaft angesehen, wenn zwischen dem Gassack und dem Gasgenerator eine Gasverteileinrichtung, insbesondere ein Füllrohr oder Füllschlauch, angeordnet ist, durch die ein gleichmäßiges Befüllen des Gassacks entlang der vollständigen Breite des Gassackes erreicht wird. Hierzu wird es als vorteilhaft angesehen, wenn das Füllrohr oder der Füllschlauch parallel zu Längsrichtung des Dachholmes des Fahrzeugs angeordnet ist.

Zur Erläuterung der Erfindung zeigen
- Fig. 1: eine Insassenschutzeinrichtung mit einem Gassack ohne erfindungsgemäße Zikzak-Faltung zum besseren Verständnis des technischen Gebiets,
- Fig. 2-3: ein Beispiel einer Insassenschutzeinrichtung und
- Fig. 4: ein Ausführungsbeispiel der Erfindung.

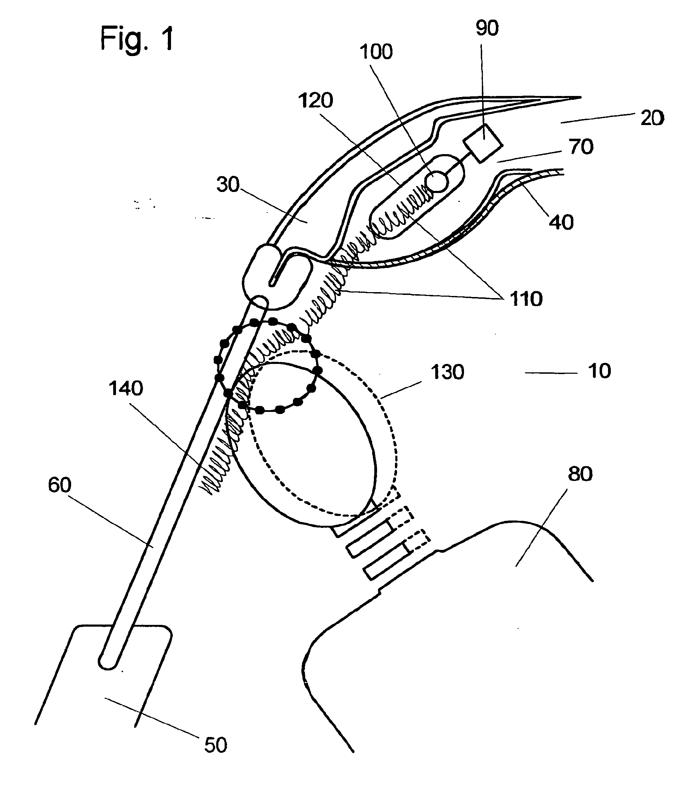

Die Figur 1 zeigt den Seitenbereich eines Fahrzeugs 10 im Schnitt. Man erkennt das Fahrzeugdach 20 mit einem Dachholm 30 sowie einem das Fahrzeugdach 20 zum Fahrzeuginneren hin verkleidenden Dachhimmel 40. Im Übrigen erkennt man eine Fahrzeugtür 50 mit einer Seitenscheibe 60.

Im Bereich des Dachholmes 30 befindet sich eine Insassenschutzeinrichtung 70 zum Schutz eines Fahrzeuginsassen 80 im Falle eines Unfalls. Die Insassenschutzeinrichtung 70 schützt dabei insbesondere vor einem Seitenaufprall oder den Folgen eines Fahrzeugüberschlags ("Rollover") wie nachfolgend deutlich werden wird; insbesondere ein Hinausschleudern von Körperteilen wird durch die Insassenschutzeinrichtung 70 verhindert.

Die Insassenschutzeinrichtung weist einen Gasgenerator 90, vorzugsweise einen Kaltgasgenerator oder einen Hybridgasgenerator auf. Der Gasgenerator 90 steht über ein Füllrohr 100 als Gasverteilereinrichtung mit einem Gassack 110 in Verbindung und bläst diesen im Falle eines Unfalls auf. Das Aufblasen zeigt die Figur 1; man erkennt, dass ein Teil des Gassacks 110 sich noch in der Insassenschutzeinrichtung 70, und zwar in einer das Füllrohr 100 und den Gassack 110 aufnehmenden Modulhülle 120 befindet, wohingegen ein anderer Teil des Gassackes 110 sich schon entfaltet und zwischen den Kopf 130 des Fahrzeuginsassen 80 und die Seitenscheibe 60 geschoben hat.

Der Gassack 110 verläuft - senkrecht zur Zeichenebene gesehen, also in Längsrichtung des Fahrzeugs - entlang des seitlichen Dachrahmens vorzugsweise von der vorderen A-Säule bis hin zur hinteren D-Säule des Fahrzeugs. Die Befestigung des Gassacks und der übrigen Teile der Insassenschutzeinrichtung erfolgt vorzugsweise im Rohbau.

In dem Beispiel gemäß der Figur 1 ist der Gassack 110 in der Modulhülle 120 zumindest teilweise aufgerollt aufbewahrt und bildet eine Sackhüllenrolle 140, die sich durch Aufrollen entfaltet. Die Rollrichtung der Sackhüllenrolle 140 ist dabei so gewählt, dass die dem Fahrzeuginsassen 80 zugewandte Seite außen und die der Seitenscheibe 60 zugewandte Seite jeweils innen in der Rolle liegt.

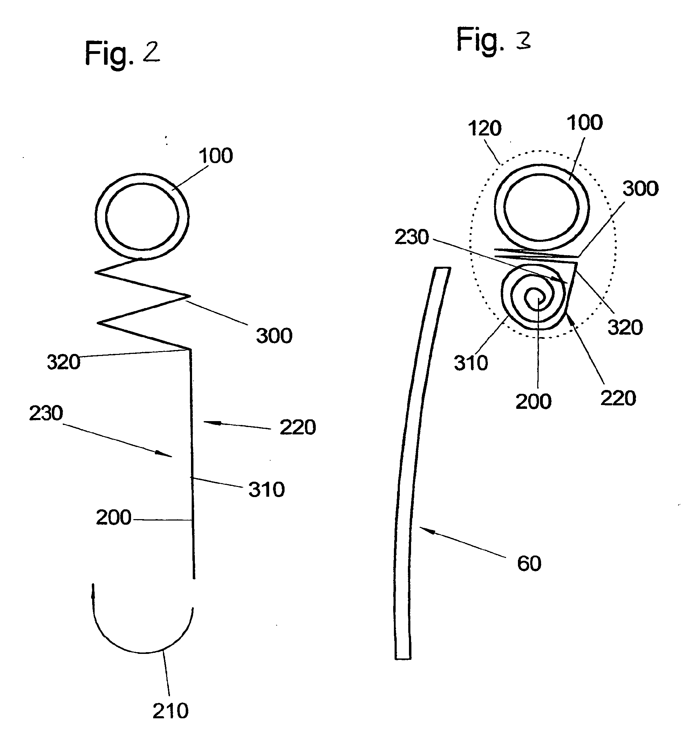

Das Entfalten des Gassackes 110 erfolgt also - zumindest teilweise - durch Abrollen der Sackhüllenrolle 140; hierdurch wird - im Gegensatz zu einer Zickzack-Faltung der Gassackhülle - gewährleistet, dass es zu einem zuverlässigen Entfalten auch dann kommt, wenn der Abstand zwischen der Seitenscheibe 60 und dem Kopf 130 des Fahrzeuginsassen sehr klein ist. Dies ist konkret darauf zurückzuführen, dass die Sackhüllenrolle 140 bei einem eventuellen Auftreffen auf dem Kopf 130 des Fahrzeuginsassen aufgrund ihrer Rollrichtung (vgl. Figur 3) stets in Richtung Seitenscheibe 60 abrollen wird und so quasi zwangsläufig in den verbleibenden Schlitz bzw. Spalt zwischen Kopf 130 und Seitenscheibe 60 hineinrollt. Bei einer Zickzackfaltung hingegen würde es in der Regel bei einem Auftreffen der Gassackhülle auf dem Kopf 130 zu einem Blockieren des Entfaltens kommen und der Gassack 110 würde sich unter Umständen in dem Bereich über dem Kopf 130 des Fahrzeuginsassen 80 entfalten.
Die Figuren 2 und 3 zeigen ein Beispiel für eine Aufbewahrung des Gassackes 110 in der Modulhülle 120 gemäß der Figur 1, wobei zusätzlich eine Zikzak-Faltung eingesetzt wird.

In der Figur 2 lässt sich die noch gasleere, ausgebreitete Gassackhülle 200 erkennen, die entlang des Pfeils 210 aufgerollt wird. Die Rollfaltung ist bei dem Beispiel gemäß den Figuren 2 und 3 mit einer Zickzack-Faltung 300 kombiniert. Konkret wird die dem Füllrohr 100 abgewandte Seite der Gassackhülle 200 zunächst aufgerollt (Bereich 310) bis zu einem Übergangspunkt 320, bei dem von der Rollfaltung in die Zickzack-Faltung 300 übergegangen wird.

Die Position des Übergangspunktes 320 ist dabei so gewählt, dass sich bei einem Entfalten der Gassackhülle 200 der aufgerollte Bereich 310 in Kopfhöhe des Fahrzeuginsassen befindet, damit ein Abrollen der Gassackhülle 200 auf dem Kopf des Gassackinsassen erreicht wird. Die "Höhe" des Übergangspunktes 320 - bei entfaltetem Gassack - liegt also räumlich über der Kopfhöhe des Fahrzeuginsassen.

Die Figur 3 zeigt dabei die gemäß der Figur 2 "zusammengelegte" - also gerollte und zickzack-gefaltete - Gassackhülle 200 im "eingebauten" Zustand, also verpackt in der Modulhülle 120. Im Übrigen ist in der Figur 3 wiederum die Seitenscheibe 60 gezeigt, um die Position der Gassackhülle 200 und des Füllrohres 100 relativ zur Seitenwand bzw. Seitenscheibe 60 zu verdeutlichen.

Auch lässt sich erkennen, dass die Rollrichtung beim Aufrollen der Gassackhülle 200 so gewählt wurde, dass die dem Fahrzeuginsassen zugewandte Seite 220 außen und die der Seitenscheibe 60 zugewandte Seite 230 innen liegt.

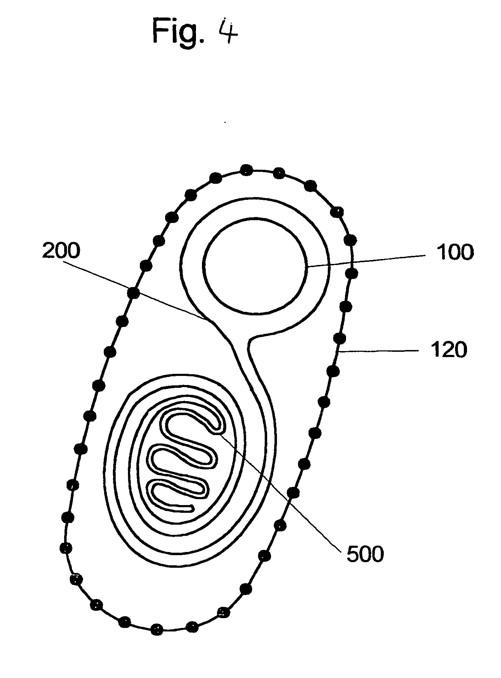

Die Figur 4 zeigt ein Ausführungsbeispiel für eine Aufbewahrung des Gassackes110 in der Modulhülle 120 gemäß der Figur 1.

Man erkennt, dass die Gassackhülle 200 im Bereich ihres dem Füllrohr 100 abgewandten Endes zunächst zickzack-gefaltet und ab einem Übergangspunkt 500 dann unter Bildung einer Sackhüllenrolle aufgerollt ist. Vorzugsweise ist die Rollrichtung dabei so gewählt, dass beim Abrollen der Gassackhülle 200 die dem Fahrzeuginsassen zugewandte Seite 220 außen und die der Seitenscheibe 60 zugewandten Seite 230 der Gassackhülle 200 innen liegt. Außerdem sieht man, dass der Teilbereich mit der Zickzack-Faltung innerhalb der Sackhüllenrolle eingerollt ist.

### Bezugszeichenliste

| | |
|---|---|
| 10 | Fahrzeug |
| 20 | Fahrzeugdach |
| 30 | Dachholm |
| 40 | Dachhimmel |
| 50 | Fahrzeugtür |
| 60 | Seitenscheibe |
| 70 | Insassenschutzeinrichtung |
| 80 | Fahrzeuginsasse |
| 90 | Gasgenerator |
| 100 | Füllrohr |
| 110 | Gassack |
| 120 | Modulhülle |
| 130 | Kopf des Insassen |
| 140 | Sackhüllenrolle |
| 200 | Gassackhülle |
| 210 | Pfeil |
| 220 | Dem Fahrzeuginsassen zugewandte Seite |
| 230 | Der Seitenscheibe zugewandte Seite |
| 300 | Zickzack-Faltung |
| 310 | Aufgerollter Bereich |
| 320 | Übergangspunkt |
| 400 | Übergangspunkt |
| 410 | Innere Sackhüllenrolle |
| 420 | Äußere Sackhüllenrolle |
| 500 | Übergangspunkt |

## Patentansprüche

1. Insassenschutzeinrichtung (70) für ein Fahrzeug mit einem Gassack (110), der im Falle eines Unfalls von einem Gasgenerator (90) der Insassenschutzeinrichtung (70) aufgeblasen wird und der derart im Dachbereich, insbesondere im Bereich des Dachholmes (3), angeordnet ist, dass er sich beim Aufblasen in dem Bereich zwischen dem Kopf (130) des Fahrzeuginsassen (80) und der Seitenwand (60) des Fahrzeugs entfaltet und den Kopf (130) des Fahrzeuginsassen (80) vor einem Aufschlagen auf der Seitenwand (60) schützt, wobei die Gassackhülle (200) des Gassacks (110) zumindest teilweise unter Bildung einer Sackhüllenrolle zusammengerollt in der Insassenschutzeinrichtung (70) verstaut ist, wobei die Gassackhülle (200) in mindestens einem Teilbereich ihrer Hülle noch eine Zickzack-Faltung (300) aufweist,
**dadurch gekennzeichnet, dass**
der Teilbereich mit der Zickzack-Faltung innerhalb der Sackhüllenrolle eingerollt ist.

2. Insassenschutzeinrichtung nach Anspruch 1, **dadurch gekennzeichnet, dass** die Gassackhülle (200) zumindest teilweise unter Berücksichtigung einer vorgegebenen Rollrichtung zu der Sackhüllenrolle (140, 410, 420) aufgerollt ist, wobei die vorgegebene Rollrichtung diejenige Rollrichtung ist, bei der die dem Fahrzeuginsassen (80) zugewandte Seite (220) der Gassackhülle (200) außen und die der Seitenwand (60) zugewandte Seite (230) der Gassackhülle innen in der Sackhüllenrolle liegt.

3. Insassenschutzeinrichtung nach Anspruch 2, **dadurch gekennzeichnet, dass** der Gassack (110) derart aufgerollt ist, dass sich die mit der vorgegebenen Rollrichtung gebildete Sackhüllenrolle (140) im Bereich der Kopfhöhe des Fahrzeugsinsassen abrollt und entfaltet.

4. Insassenschutzeinrichtung nach einem der vorangehenden Ansprüche, **dadurch gekennzeichnet, dass** der Gassack (110) in der Insassenschutzeinrichtung (70) von einer Modulhülle (120) als Schutzhülle umgeben ist.

5. Insassenschutzeinrichtung nach einem der vorangehenden Ansprüche, **dadurch gekennzeichnet, dass** zwischen dem Gassack (110) und dem Gasgenerator (90) eine Gasverteileinrichtung (100) angeordnet ist, mit der das Gas gleichmäßig verteilt in den Gassack (110) eingeblasen wird.

6. Insassenschutzeinrichtung nach Anspruch 5, **dadurch gekennzeichnet, dass** die Gasverteileinrichtung durch ein Füllrohr (100) oder einen Füllschlauch gebildet ist.

7. Insassenschutzeinrichtung nach einem der vorangehenden Ansprüche, **dadurch gekennzeichnet, dass** die Seitenwand durch eine Seitenscheibe (60) des Fahrzeugs gebildet ist.

## Claims

1. Occupant protection device (70) for a vehicle having an airbag (110) which is inflated in the event of an accident by a gas generator (90) of the occupant protection device (70) and which is arranged in the roof region, in particular in the region of the roof strut (3), in such a manner that it deploys when inflated into the region between the head (130) of the vehicle occupant (80) and the side wall (60) of the vehicle and protects the head (130) of the vehicle occupant (80) against hitting the side wall (60), the airbag covering (200) of the airbag (110) being stowed at least partially rolled up in the occupant protection device (70) with the formation of a bag-covering roll, wherein the airbag covering (200) also has a zigzag fold (300) at least in a subregion of its covering, **characterized in that** the subregion with the zigzag fold is rolled inside the bag-covering roll.

2. Occupant protection device according to Claim 1, **characterized in that** the airbag covering (200) is at least partially rolled up taking account of a predetermined rolling direction to form a bag-covering roll (140, 410, 420), the predetermined rolling direction being the rolling direction in which that side (220) of the airbag covering (200) which faces the vehicle occupant (80) is situated on the outside of the bag-covering roll and that side (230) of the airbag covering which faces the side wall (60) is situated on the inside of the bag-covering roll.

3. Occupant protection device according to Claim 2, **characterized in that** the airbag (110) is rolled up in such a manner that the bag-covering roll (140), formed with the predetermined rolling direction, unrolls and deploys in the region of the head height of the vehicle occupant.

4. Occupant protection device according to one of the preceding claims, **characterized in that** the airbag (110) is surrounded in the occupant protection device (70) by a module covering (120) as a protective covering.

5. Occupant protection device according to one of the preceding claims, **characterized in that** a gas-distributing device (100) is arranged between the airbag (110) and the gas generator (90) and is used to blow the gas into the airbag (110) in a uniformly distributed manner.

6. Occupant protection device according to Claim 5, **characterized in that** the gas-distributing device is formed by a filling pipe (100) or a filling hose.

7. Occupant protection device according to one of the preceding claims, **characterized in that** the side wall is formed by a side window (60) of the vehicle.

## Revendications

1. Dispositif de protection des occupants (70) d'un véhicule doté d'un coussin gonflable (110) qui, en cas d'accident, est gonflé par un générateur de gaz (90) du dispositif (70) de protection des occupants et qui est disposé dans la zone du plafond, en particulier dans la zone du montant (30) du toit, de telle sorte qu'il se déploie, lors du gonflage, dans l'espace entre la tête (130) de l'occupant (80) du véhicule et la paroi latérale (60) du véhicule et qu'il protège la tête (130) de l'occupant (80) du véhicule contre un choc contre la paroi latérale (60), l'enveloppe (200) du coussin gonflable (110) étant arrimée, au moins partiellement enroulée, dans le dispositif (70) de protection des occupants par la formation d'un enroulement d'enveloppe de coussin, l'enveloppe (200) du coussin gonflable présentant, dans au moins une partie de son enveloppe, un pliage en zigzag (300),
**caractérisé en ce que**
la partie avec le pliage en zigzag est enroulée à l'intérieur de l'enroulement d'enveloppe de coussin.

2. Dispositif de protection des occupants selon la revendication 1, **caractérisé en ce que** l'enveloppe (200) de coussin gonflable est enroulée, en un enroulement d'enveloppe de coussin (140, 410, 420), en respectant au moins partiellement un sens d'enroulement prédéfini, le sens prédéfini étant le sens d'enroulement par lequel le côté (220) de l'enveloppe de coussin gonflable (200) tourné vers l'occupant (80) du véhicule se retrouve à l'extérieur de l'enroulement et par lequel le côté (230) de l'enveloppe de coussin gonflable, tourné vers la paroi latérale (60), se retrouve à l'intérieur de l'enroulement d'enveloppe de coussin.

3. Dispositif de protection des occupants selon la revendication 2, **caractérisé en ce que** le coussin gonflable (110) est enroulé de telle sorte que l'enroulement (140) d'enveloppe de coussin, formé en suivant le sens d'enroulement prédéfini, se déroule et se déploie dans une zone située à hauteur de la tête de l'occupant du véhicule.

4. Dispositif de protection des occupants selon l'une des revendications précédentes **caractérisé en ce que** le coussin gonflable (110) est entouré, dans le dispositif (70) de protection des occupants, d'une enveloppe de module (120) qui tient lieu d'enveloppe protectrice.

5. Dispositif de protection des occupants selon l'une des revendications précédentes **caractérisé en ce qu'**entre le coussin gonflable (110) et le générateur de gaz (90) est disposé un dispositif (100) de répartition de gaz, avec lequel le gaz est insufflé dans le coussin gonflable (110) en étant uniformément réparti.

6. Dispositif de protection des occupants selon la revendication 5, **caractérisé en ce que** le dispositif de répartition de gaz est formé d'un tube de gonflage (100) ou d'un tuyau de gonflage.

7. Dispositif de protection des occupants selon l'une des revendications précédentes **caractérisé en ce que** la paroi latérale est formée par une vitre latérale (60) du véhicule.
